# EUROPEAN PATENT SPECIFICATION

(11) **EP 1 701 420 B1**
(45) Date of publication and mention of the grant of the patent: **30.04.2014**
(21) Application number: 05075547.9
(22) Date of filing: 07.03.2005
(51) Int. Cl.: H02B 1/32, H02B 1/20

(54) **An electric switchboard and a medium voltage substation comprising such a switchboard**
Elektrischer Verteiler und Mittelspannungsstation mit einem derartigen Verteiler
Répartiteur électrique et poste moyenne tension avec ce répartiteur

(43) Date of publication of application: 13.09.2006
(73) Proprietor: ABB Technology AG, 8050 Zürich (CH)
(72) Inventor: Tellarini, Marco, 5417 Untersiggenthal (CH); Deck, Bernhard, 79809 Weilheim (DE); Rudolph, Paul, 5234 Villigen (CH)
(74) Representative: De Santis, Giovanni

(56) References cited:
- GB-A- 1 102 698
- US-A- 5 025 171
- US-A1- 2004 253 922
- US-B1- 6 366 448

## Description

The present invention relates to an electric switchboard, and to a medium voltage substation comprising one or more of such switchboards, having improved functions and characteristics.

With the definition of a "medium voltage substation" it is here meant a substation for applications having a nominal rated voltage comprised between 1 kV and 70 kV.

As it is known, substations consist of electrical apparatuses widely used for distribution of electrical power; in particular, one basic task of a medium-voltage substation is to switch down, in a safe and reliable way, the voltage of distributed power to suitable levels which are useful for a wide type of users, such as utility companies, various type of plants, e.g. steel works, petrochemical plants, et cetera.

Current medium voltage substations are realized by using a certain number of electric switchboards which are operatively coupled to each other; each switchboard comprises a metallic enclosure, having usually a parallelepiped structure, inside which an adequate space is delimited for accommodating the various equipments which are necessary for performing the required system management functions that have to be dealt with for electrical energy distribution. In the technical field, these functions are usually divided into two different categories, generally indicated as primary functions and secondary functions; primary functions are those functions related to the main voltage, current and power distribution, while secondary functions are the ones related to auxiliary and control features.

Some examples of primary functions are: making, breaking, conduct the nominal current, withstand the short circuit current for a certain time, disconnection, earthing, isolation of live parts from operators.

Examples of secondary functions are: protection, interlocking, local or remote supervision, local or remote control, automation, measure, metering, diagnostic, communication. Examples of suitable equipments devised to perform the different functions are: circuit breakers, disconnectors, various types of measuring and electronic devices, protective relays, busbars, plugs, et cetera.

At the present state of the art, although known medium voltage substations allow performing the required tasks in an adequate manner, still they have some drawbacks and technical inconvenient which deserve further improvements and optimization.

In particular, one significant drawback resides in the fact that the various components of each switchboard are connected to each other by cabling; for example, it is necessary to connect auxiliary contacts to terminal blocks, installing and cabling measuring devices, cabling all inputs and outputs to protection and control units, cabling contact position sensors, e.g. for interlocks, to required terminal blocks or relays. Then, when realizing the substation, the functional units of the various switchboards have to be properly wired in order to realize the needed functional coordination and interdependence. Clearly, this results in an over amount of operations which are costly and time consuming; further, the unavoidable cabling and wiring lead to a cumbersome design inside each switchboard, and makes the substation as a whole much more complex. This situation is significantly worsened by the fact that each substation has a layout which is purposely designed based on specific customized requirements and should be tested before installation; as a matter of fact, the substation has first to be assembled in-factory in the operative configuration and tested; then, it should be dismantled and shipped to the application site, where it is finally reassembled again. Hence, a considerable amount of engineering and commissioning operations are involved, thus negatively influencing the overall manufacturing cost of the substation.

Patent US 6,366,448 discloses a HV supply device which has a first housing part that serves as an outside cover. A second housing part forming two sides is provided. On the first side there is the high-voltage supply part, and on the second side there is the low-voltage supply part which is separated from the high-voltage supply part. The first side of the second housing part has a first mounting rack to receive electrical or electronic components, and the second side has a second mounting rack to receive other electrical or electronic low-voltage. The two mounting racks are connected by an electrical connecting line penetrating the second housing part.

Therefore, the main aim of the present invention is to provide an electric switchboard, and a related medium voltage substation comprising such a switchboard, which allow to overcome the above mentioned drawbacks and disadvantages, and in particular which can be realized through an optimized structure and in a simplified manner with respect to prior art solutions, while offering at the same time improved performances and characteristics.

This aim is achieved by an electric switchboard comprising an enclosure having a door and a plurality of walls which all together delimit an inside volume suitable to accommodate internal components of the switchboard, characterized in that the switchboard comprises a compartment which is shaped to allow performing wireless communication of signals between at least one of said internal components and one external component, wherein said compartment comprises a plurality of perimeter walls configured so as to delimit an internal dedicated environment where the propagation of said signals is confined.

The aim is also achieved by a medium voltage substation as defined in the related claims.

Further characteristics and advantages will become apparent from the description of some preferred but not exclusive embodiments of an electric switchboard and a medium voltage substation according to the invention, illustrated only by way of non-limitative examples with the accompanying drawing, wherein:
Figure 1 is a perspective view schematically illustrating an electric switchboard according to a preferred embodiment of the invention;
Figure 2 is a perspective view illustrating a wave guide device used in the switchboard according to the invention.
Figure 3 is a front view schematically illustrating a medium voltage substation comprising a plurality of switchboards of the type illustrated in Figure 1.

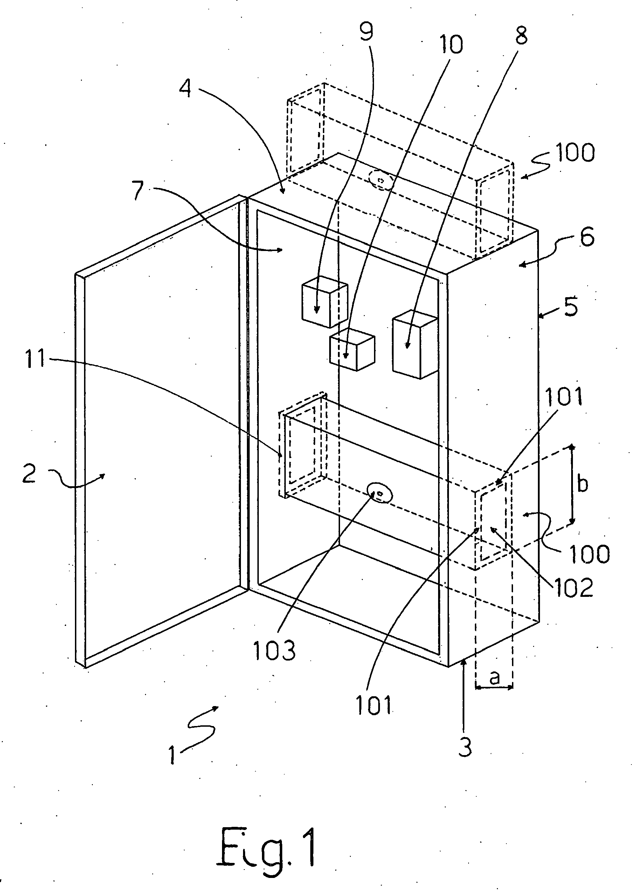

An electric switchboard according to the invention is illustrated in Figure 1 by the overall reference number 1; as shown, the switchboard 1 comprises an enclosure having one (or more) door 2 provided at the front face, and a plurality of walls, namely a base wall 3, a top wall 4, a rear wall 5, two side walls 6, which all together delimit an inside volume 7 suitable to accommodate internal components of the switchboard 1 itself; according to solutions which are well known in the art and therefore not described herein in further details, the internal components usually comprise either electric and/or electronic devices, such as one or more circuit breakers 8, current and/or measuring devices sensors 9, such as for example sensors or instrument transformers, intelligent electronic devices 10 e.g. for diagnostic, protection, monitoring, controlling, digital interfaces, et cetera.

Advantageously, the switchboard 1 comprises a dedicated communication compartment 100 which is shaped to allow performing wireless communication of signals 50 between at least one of the internal components and one further component; the further component(s) being external to the switchboard 1, for example, one (or more) component belonging to an other switchboard, a remote control unit, or even a further internal component of the same switchboard 1.

According to a more preferred embodiment, the compartment 100 is positioned within the inside volume 7 and comprises a plurality of perimeter walls 101 which are configured so as to delimit an internal dedicated environment 102 where the propagation of the signals 50 is substantially confined; in particular, the perimeter walls 101 of the compartment 100 are configured so as the internal dedicated environment 102 is divided off from the remaining part of the inside volume 7, namely they delimit an internal sub-volume partitioned from the remaining part of the inside volume 7 where the propagation of the signals 50 is substantially conveyed and confined.

Suitable transceiving means, comprising an antenna 103, are operatively connected to and pass through at least one of the perimeter walls 101.

Advantageously, at least some of the perimeter walls 101 of the compartment 100, preferably all, comprise an anti-interference shielding layer, e.g. a layer suitable to oppose possible signal interferences and/or disturbances which could affect the quality and reliability of the signals under transmission, such as electromagnetic noise generated by various sources, radio-interference signals, and the like; more preferably, the perimeter walls 101 comprise a layer of electrically conductive material at least partially surrounding the dedicated environment 102 and having good electromagnetic shielding properties. In this way the conductive layer performs a shielding function and facilitates the propagation of signals 50 inside the compartment 100.

According to a possible embodiment illustrated in the figures, the compartment 100 has a tunnel-shaped configuration which extends transversely, in a substantially rectilinear way, between the two opposite side walls 6 of the enclosure which - in correspondence of the end portions of the compartment 100 - may exhibit suitable openings at one or both ends. Preferably, the tunnel-shaped compartment 100 has a substantially rectangular cross-section, wherein the lengths of the sides (a,b) of the cross-section are in a ratio of 1:2; this solution allows improving the quality of the signals propagation in particular at high frequency e.g. in the range of GHz; for example, with a frequency of transmission of 5 GHz side (a) may have a length of 0,05 m, whereas side (b) has a length of 0,025 m.

As shown in figure 1, there is also provided at least one signal absorbing element 11, e.g. a suitably shaped end-cap which is operatively coupled to the tunnel-shaped compartment 100 at an end portion thereof; preferably, the absorbing element 11 comprises a conductive foam, for example a foamed polyurethane doped with conductive particles of a type commercially available on the market.

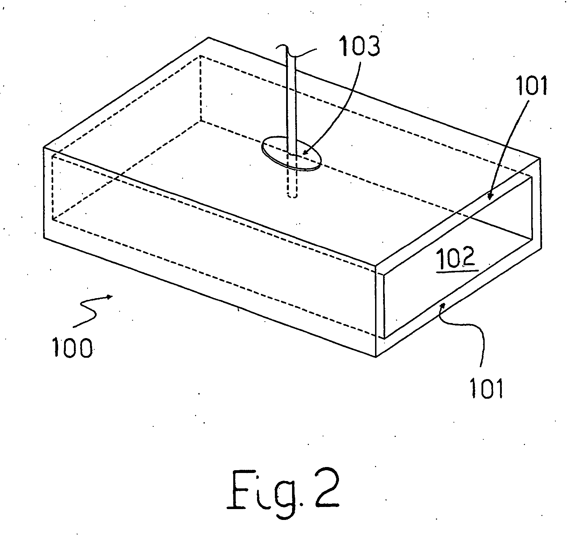

According to a preferred embodiment, which is extremely simple from the constructive point of view and functional effective, the compartment 100 is realized by using a metallic wave guide device illustrated in figure 2 also by the reference number 100; advantageously, the device 100 is made of a single body of aluminum, or alternatively of copper, of appropriate thickness. In this way, the perimeter walls 101 are constituted only by the selected conductive material which is used at the same time, as the partitioning elements, as the anti-interference shielding layer and also it allows the propagation of the signals inside the compartment itself.

The metallic wave guide device 100 is placed within the inside volume 7 and is removably connected to the enclosure, for example by means of a drawer-like system, or according to a snap-fit coupling, or with other suitable mechanical couplings; in this way, maintenance interventions, replacements et cetera, are significantly eased.

Alternatively, the device 100 can be fixedly attached to the enclosure, e.g. by using suitable fastening means.

According to an alternative embodiment schematically illustrated in dotted lines in figure 1, the compartment 100 could be positioned outside the switchboard 1 and operatively coupled to its enclosure.

The switchboard 1 according to the invention can be advantageously used in medium as well as low voltage voltage applications and it is particularly suitable for realizing a medium voltage substation; hence, a further object of the present invention relates to a medium voltage substation comprising at least one switchboard 1 of the type above described.

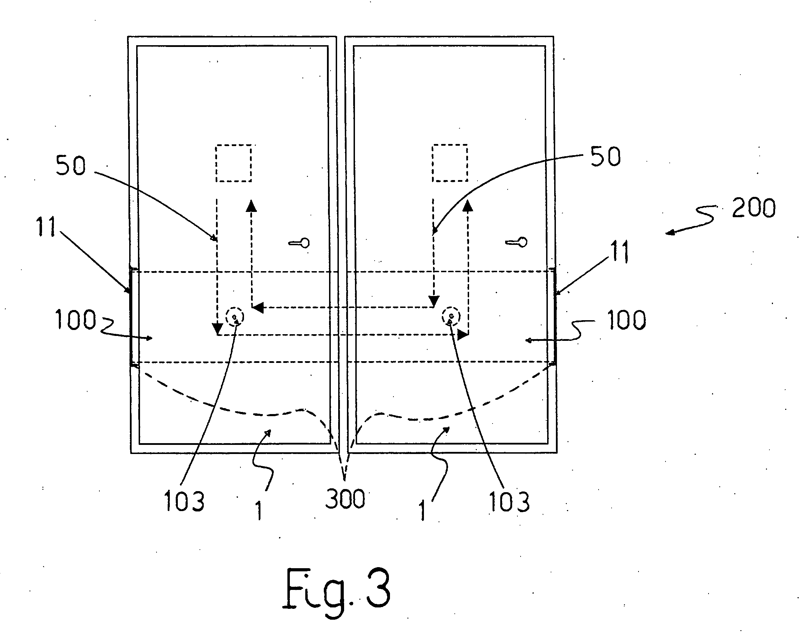

An example of a medium voltage substation according to the present invention is schematically illustrated in figure 3 by the reference number 200; as shown, the substation 200 preferably comprises at least two switchboards 1 which are positioned adjacent with their respective compartments 100 facing to and slightly displaced from each other. In particular, the switchboards 1 are positioned side by side to each other with their respective compartments 100 operatively linked so as to define a segmented substantially rectilinear tunnel 300, which in practice constitutes a wireless communication path inside which the signals travel. Further, at the two external ends of the segmented wireless communication path 300, there are provided two corresponding signal absorbing elements 11 which are connected each to a respective end portion of a compartment 100.

For the sake of simplicity, in figure 3 there are shown only two switchboards 1, but the substation 200 can be clearly composed by a desired number of switchboards 1 which can be placed side by side, preferably in a row. Accordingly, in a particularly preferred embodiment, the substation 200 comprises a plurality of switchboards 1 each having a corresponding enclosure provided with a least a door 2 and a plurality of walls which all together delimit an inside volume 7 suitable to accommodate internal components; each switchboard 1 comprises an own compartment 100 which is positioned within the respective inside volume 7 and is shaped to allow performing wireless communication of signals; the compartments 100 are positioned so as to define a segmented substantially rectilinear wireless communication path 300 extending through the plurality of inside volumes 7 defined by the switchboards 1.

Also in the configuration where the substation comprises a plurality of switchboards 1, two absorbing elements 11 are preferably positioned at the two opposite external ends of the realized segmented path 300.

Hence, in applications the signals 50 coming from a component of a first switchboard 1, preferably in the form of radio frequency waves properly modulated in order to carry the desired data, are transmitted into the dedicated environment 102 by the antenna of the transceiving means 103; there, they are confined inside the path 300 defined by the various compartments 100 and conveyed, in this protected and shielded room, towards the antenna 103 associated to an other compartment 100; in turn, this antenna allows transmitting the signals 50 to the component of a second switchboard 1 devised to receive them. The elements 11 at the end of the path 300 avoid or at least substantially reduce the risk of signal reflection.

In practice, it has been found that the switchboard according to the present invention and the related medium voltage substation as well, fully achieves the intended aim, giving several advantages with respect to prior art solutions. In fact, as previously described, the solution conceived thanks to the fact that allows transmitting signals in a wireless manner and in a protected environment purposely and exclusively dedicated to communication, results in a substantial simplification of the constructive layout of each switchboard, and moreover of the whole layout of substations which are composed by modules functionally interdependent but structurally/mechanically independent. In fact, the switchboards have to be simply placed close one to the other without any cabling or electrical/mechanical continuity therebetween, but just facing the compartments 100 to each other; as a matter of fact, manufacturing, commissioning and maintenance operations are extremely simplified, since for example in-factory assembling for tests and on-site final installations do not require any assembling-dismantling- and reassembling operations which are instead mandatory for prior art solutions. In addition, if needed, it is possible to vary the layout of the substation by adding/eliminating/substituting one or more switchboards, in a very simple and fast way. Further, the signals are transmitted in a reliable and protected way, with the possibility of data communication practically at any desired speed, be it high or low, and at the desired single frequency or even by multiple frequencies; for example, it is possible the transfer of real-time process data, such as analog and voltage samples. It is also to be underlined that such results are achieved by an innovative solution which is structurally simple and can be realized by means of extremely simplified manufacturing operations, thus obtaining significant savings in terms of material, time and production costs; in particular, when the compartment 100 is placed inside the enclosure, it constitutes in practice a further component of the switchboard and is directly and automatically protected from the environment external to the switchboard 1 itself.

The switchboard and the related medium voltage substation thus conceived, are susceptible of modifications and variations, all of which are within the scope of the inventive concept; all the details may furthermore be replaced with technically equivalent elements. For example the compartment 100 can be realized by using separate pieces, e.g. a plurality of sheets of suitable materials which could be connected to the enclosure piece by piece or first joined to each other and then as a whole to the enclosure, or even a tube of plastics coated by a layer of electrically conductive material; the shape of the compartment 100 could be also different, or the perimeter walls 101 can be realized combining more layers of different type and material. Moreover, if needed or required by the specific application, it is possible to use also interconnecting elements, e.g. mechanical fittings which can be placed between adjacent compartments 100 and operatively associated to them in order to better guarantee the proper alignment. Also the materials used, so long as they are compatible with the specific use and purpose, as well as the dimensions, may be any according to the requirements and the state of the art.

## Claims

1. An electric switchboard (1) comprising an enclosure having a door (2) and a plurality of walls (3,4,5,6) which all together delimit an inside volume (7) suitable to accommodate internal components of the switchboard (1), **characterized in that** the switchboard (1) comprises a compartment (100) which is shaped to allow performing wireless communication of signals (50) between at least one of said internal components (8,9,10) and one external component, wherein said compartment (100) comprises a plurality of perimeter walls (101) configured so as to delimit an internal dedicated environment (102) where the propagation of said signals (50) is confined.

2. An electric switchboard (1) according to claim 1 **characterized in that** said compartment (100) is positioned within said inside volume (7).

3. An electric switchboard (1) according to claim 2, **characterized in that** the perimeter walls (101) of said compartment (100) are configured so as said internal dedicated environment (102) is divided off from the remaining part of said inside volume (7).

4. An electric switchboard (1) according to claim 2 or 3, **characterized in that** at least some of said perimeter walls (101) comprise an anti-interference shielding layer.

5. An electric switchboard (1) according to one or more of the preceding claims, **characterized in that** at least some of said perimeter walls (101) comprise a layer of electrically conductive material.

6. An electric switchboard (1) according to one or more of the preceding claims **characterized in that** said compartment (100) has a tunnel-shaped configuration which extends transversely, in a substantially rectilinear way, between two opposite side walls (6) of the enclosure, and **in that** there are provided transceiving means (103) which are operatively connected to and pass through at least one of said perimeter walls (101).

7. An electric switchboard (1) according to claim 6 **characterized in that** said tunnel-shaped compartment (100) has a substantially rectangular cross-section, the lengths of its sides (a,b) being in a ratio of 1:2.

8. An electric switchboard (1) according to one or more of the preceding claims, **characterized in that** it comprises at least one signal absorbing element (11) which is coupled to said tunnel-shaped compartment (100) at an end portion thereof.

9. An electric switchboard (1) according to claim 8 **characterized in that** said signal absorbing element (11) comprises a conductive foam.

10. An electric switchboard (1) according to one or more of the preceding claims **characterized in that** said compartment (100) comprises a metallic wave guide device which is fixedly attached to said enclosure.

11. An electric switchboard (1) according to one or more of the claims 1 to 9 **characterized in that** said compartment (100) comprises a metallic wave guide device (100) which is removably connected to said enclosure.

12. An electric switchboard (1) according to claim 10 or 11 **characterized in that** said metallic wave guide device (100) is made in a single body of aluminum or copper.

13. An electric switchboard (1) according to claim 1 **characterized in that** said compartment (100) is positioned outside and operatively coupled to said enclosure.

14. A medium voltage substation (200) **characterized in that** it comprises at least a first switchboard (1) according to one or more of the preceding claims.

15. A medium voltage substation according to claim 14 **characterized in that** it comprises a second switchboard (1) according to one or more of the claims from 1 to 13, said first and second switchboards (1) being mutually positioned with their respective compartments (100) facing to each other.

16. A medium voltage substation (200) according to claim 15 **characterized in that** said first and second switchboards (1) are positioned side by side to each other with their respective compartments (100) operatively linked so as to define a segmented substantially rectilinear wireless communication path (300).

17. A medium voltage substation (200) according to claim 16 **characterized in that** it comprises a first and a second signal absorbing elements (11) which are connected each to a respective end portion of said segmented wireless communication path (300).

18. A medium voltage substation (200) comprising a plurality of switchboards (1) according to claim 1, each comportment being positioned within the respective inside volume (7); said compartments (100) being positioned so as to define a segmented substantially rectilinear wireless communication path (300) extending through the plurality of inside volumes (7) defined by the switchboards (1).

## Patentansprüche

1. Elektrische Schaltanlage (1), aufweisend ein Gehäuse mit einer Tür (2) und einer Mehrzahl an Wänden (3, 4, 5, 6), die alle zusammen einen Innenraum (7) abgrenzen, der geeignet ist, interne Bauteile der Schaltanlage (1) aufzunehmen, **dadurch gekennzeichnet, dass** die Schaltanlage (1) ein Fach (100) aufweist, das so geformt ist, dass eine Drahtloskommunikation von Signalen (50) zwischen zumindest einem der internen Bauteile (8, 9, 10) und einem externen Bauteil stattfinden kann, wobei das Fach (100) eine Mehrzahl von Einfassungswänden (101) aufweist, die so konfiguriert sind, dass sie eine interne zugeordnete Umgebung (102), in der die Ausbreitung der Signale (50) begrenzt ist, abgrenzen.

2. Elektrische Schaltanlage (1) nach Anspruch 1, **dadurch gekennzeichnet, dass** sich das Fach (100) innerhalb des Innenraums (7) befindet.

3. Elektrische Schaltanlage (1) nach Anspruch 2, **dadurch gekennzeichnet, dass** die Einfassungswände (101) des Fachs (100) so konfiguriert sind, dass die interne zugeordnete Umgebung (102) von dem übrigen Teil des Innenraums (7) abgetrennt ist.

4. Elektrische Schaltanlage (1) nach Anspruch 2 oder 3, **dadurch gekennzeichnet, dass** zumindest einige der Einfassungswände (101) eine Entstörungsschutzschicht aufweisen.

5. Elektrische Schaltanlage (1) nach einem oder mehreren der vorgenannten Ansprüche, **dadurch gekennzeichnet, dass** zumindest einige der Einfassungswände (101) eine Schicht aus elektrisch leitendem Material aufweisen.

6. Elektrische Schaltanlage (1) nach einem oder mehreren der vorgenannten Ansprüche, **dadurch gekennzeichnet, dass** das Fach (100) eine tunnelförmige Konfiguration aufweist, die in einer im Wesentlichen geradlinigen Richtung transversal zwischen zwei gegenüberliegenden Seitenwänden (6) des Gehäuses verläuft, und dadurch, dass Sendeempfangsmittel (103) vorhanden sind, die operativ mit zumindest einer der Einfassungswände (101) verbunden sind und durch diese hindurch verlaufen.

7. Elektrische Schaltanlage (1) nach Anspruch 6, **dadurch gekennzeichnet, dass** das tunnelförmige Fach (100) einen im Wesentlichen rechteckigen Querschnitt aufweist, wobei seine Seitenlängen (a, b) ein Verhältnis von 1:2 aufweisen.

8. Elektrische Schaltanlage (1) nach einem oder mehreren der vorgenannten Ansprüche, **dadurch gekennzeichnet, dass** sie zumindest ein signalabsorbierendes Element (11) aufweist, dass mit dem tunnelförmigen Fach (100) an einem Endabschnitt desselben verbunden ist.

9. Elektrische Schaltanlage (1) nach Anspruch 8, **dadurch gekennzeichnet, dass** das signalabsorbierende Element (11) einen leitenden Schaum aufweist.

10. Elektrische Schaltanlage (1) nach einem oder mehreren der vorgenannten Ansprüche, **dadurch gekennzeichnet, dass** das Fach (100) eine metallische Wellenführungseinrichtung aufweist, die fest an dem Gehäuse montiert ist.

11. Elektrische Schaltanlage (1) nach einem oder mehreren der Ansprüche 1 bis 9, **dadurch gekennzeichnet, dass** das Fach (100) eine metallische Wellenführungseinrichtung (100) aufweist, die abnehmbar mit dem Gehäuse verbunden ist.

12. Elektrische Schaltanlage (1) nach Anspruch 10 oder 11, **dadurch gekennzeichnet, dass** die metallische Wellenführungseinrichtung (100) aus einem einzelnen Körper aus Aluminium oder Kupfer besteht.

13. Elektrische Schaltanlage (1) nach Anspruch 1, **dadurch gekennzeichnet, dass** sich das Fach (100) außerhalb des Gehäuses befindet und operativ mit diesem verbunden ist.

14. Mittelspannungsunterstation (200), **dadurch gekennzeichnet, dass** sie zumindest eine erste Schaltanlage (1) nach einem oder mehreren der vorgenannten Ansprüche aufweist.

15. Mittelspannungsunterstation (200) nach Anspruch 14, **dadurch gekennzeichnet, dass** sie eine zweite Schaltanlage (1) nach einem oder mehreren der Ansprüche 1 bis 13 aufweist, wobei die erste und zweite Schaltanlage (1) jeweils so positioniert sind, dass ihre jeweiligen Fächer (100) einander gegenüberliegen.

16. Mittelspannungsunterstation (200) nach Anspruch 15, **dadurch gekennzeichnet, dass** die erste und zweite Schaltanlage (1) nebeneinander positioniert sind, wobei ihre jeweiligen Fächer (100) operativ verbunden sind, so dass ein segmentierter, im Wesentlichen geradliniger Drahtloskommunikationspfad (300) definiert wird.

17. Mittelspannungsunterstation (200) nach Anspruch 16, **dadurch gekennzeichnet, dass** sie ein erstes und ein zweites signalabsorbierendes Element (11) aufweist, die jeweils mit einem entsprechenden Endabschnitt des segmentierten Drahtloskommunikationspfads (300) verbunden sind.

18. Mittelspannungsunterstation (200), aufweisend eine Mehrzahl an Schaltanlagen (1) nach Anspruch 1, wobei sich jedes Fach (100) innerhalb des jeweiligen Innenraums (7) positioniert ist und wobei die Fächer (100) so positioniert sind, dass sie einen segmentierten, im Wesentlichen geradlinigen Drahtloskommunikationspfad (300) definieren, der durch die Mehrzahl an Innenräumen (7), die von den Schaltanlagen (1) definiert werden, hindurch verläuft.

## Revendications

1. Tableau de distribution électrique (1) comprenant une enceinte ayant une porte (2) et une pluralité de parois (3, 4, 5, 6) qui tous ensemble délimitent un volume intérieur (7) approprié pour loger des composants internes du tableau de distribution (1), **caractérisé en ce que** le tableau de distribution (1) comprend un compartiment (100) qui est façonné de manière à permettre d'effectuer une communication sans fil de signaux (50) entre au moins l'un desdits composants internes (8, 9, 10) et un composant externe, dans lequel ledit compartiment (100) comprend une pluralité de parois périmétriques (101) configurées de manière à délimiter un environnement dédié interne (102) où la propagation desdits signaux (50) est confinée.

2. Tableau de distribution électrique (1) selon la revendication 1, **caractérisé en ce que** ledit compartiment (100) est positionné dans ledit volume intérieur (7).

3. Tableau de distribution électrique (1) selon la revendication 2, **caractérisé en ce que** les parois périmétriques (101) dudit compartiment (100) sont configurées de manière à ce que ledit environnement dédié interne (102) soit séparé de la partie restante dudit volume intérieur (7).

4. Tableau de distribution électrique (1) selon la revendication 2 ou 3, **caractérisé en ce qu'**au moins certaines parois parmi lesdites parois périmétriques (101) comprennent une couche de blindage anti-interférences.

5. Tableau de distribution électrique (1) selon l'une ou plusieurs des revendications précédentes, **caractérisé en ce qu'**au moins certaines parois parmi lesdites parois périmétriques (101) comprennent une couche de matériau électriquement conducteur.

6. Tableau de distribution électrique (1) selon l'une ou plusieurs des revendications précédentes, **caractérisé en ce que** ledit compartiment (100) présente une configuration en forme de tunnel qui s'étend de manière transversale, d'une manière essentiellement rectiligne, entre deux parois latérales opposées (6) de l'enceinte, et **en ce que** des moyens d'émission-réception (103) sont fournis, qui sont reliés de manière fonctionnelle à au moins l'une desdites parois périmétriques (101) et passent à travers au moins l'une desdites parois périmétriques (101).

7. Tableau de distribution électrique (1) selon la revendication 6, **caractérisé en ce que** ledit compartiment en forme de tunnel (100) présente une section transversale essentiellement rectangulaire, les longueurs de ses côtés (a, b) étant dans un rapport de 1 : 2.

8. Tableau de distribution électrique (1) selon l'une ou plusieurs des revendications précédentes, **caractérisé en ce qu'**il comprend au moins un élément d'absorption de signaux (11) qui est couplé audit compartiment en forme de tunnel (100) au niveau d'une partie d'extrémité de celui-ci.

9. Tableau de distribution électrique (1) selon la revendication 8, **caractérisé en ce que** ledit élément d'absorption de signaux (11) comprend une mousse conductrice.

10. Tableau de distribution électrique (1) selon l'une ou plusieurs des revendications précédentes, **caractérisé en ce que** ledit compartiment (100) comprend un dispositif de guidage d'onde métallique qui est attaché de manière fixe à ladite enceinte.

11. Tableau de distribution électrique (1) selon l'une ou plusieurs des revendications 1 à 9, **caractérisé en ce que** ledit compartiment (100) comprend un dispositif de guidage d'onde métallique (100) qui est relié de manière amovible à ladite enceinte.

12. Tableau de distribution électrique (1) selon la revendication 10 ou 11, **caractérisé en ce que** ledit dispositif de guidage d'onde métallique (100) est réalisé en un corps unique en aluminium ou en cuivre.

13. Tableau de distribution électrique (1) selon la revendication 1, **caractérisé en ce que** ledit compartiment (100) est positionné à l'extérieur de ladite enceinte et couplé de manière fonctionnelle à celle-ci.

14. Poste moyenne tension (200), **caractérisé en ce qu'**il comprend au moins un premier tableau de distribution (1) selon l'une ou plusieurs des revendications précédentes.

15. Poste moyenne tension selon la revendication 14, **caractérisé en ce qu'**il comprend un deuxième tableau de distribution (1) selon l'une ou plusieurs des revendications 1 à 13, lesdits premier et deuxième tableaux de distribution (1) étant positionnés mutuellement avec leurs compartiments respectifs (100) se faisant face l'un l'autre.

16. Poste moyenne tension (200) selon la revendication 15, **caractérisé en ce que** lesdits premier et deuxième tableaux de distribution (1) sont positionnés l'un à côté de l'autre avec leurs compartiments respectifs (100) liés de manière fonctionnelle de façon à définir une voie de communication sans fil segmentée essentiellement rectiligne (300).

17. Poste moyenne tension (200) selon la revendication 16, **caractérisé en ce qu'**il comprend un premier et un deuxième élément d'absorption de signaux (11) qui sont reliés chacun à une partie d'extrémité respective de ladite voie de communication sans fil segmentée (300).

18. Poste moyenne tension (200) comprenant une pluralité de tableaux de distribution (1) selon la revendication 1, chacun des compartiments étant positionné dans le volume intérieur (7) respectif, lesdits compartiments (100) étant positionnés de façon à définir une voie de communication sans fil segmentée essentiellement rectiligne (300) s'étendant à travers la pluralité de volumes intérieurs (7) définis par les tableaux de distribution (1).
